# EUROPÄISCHE PATENTSCHRIFT

(11) **EP 1 553 031 B1**
(45) Veröffentlichungstag und Bekanntmachung des Hinweises auf die Patenterteilung: **30.05.2007**
(21) Anmeldenummer: 04031079.9
(22) Anmeldetag: 31.12.2004
(51) Int. Cl.: B65G 1/137

(54) **Verpackungssystem und -verfahren für den automatisierbaren Transport, die automatisierbare Handhabung und die Lagerung von Stückgut über eine Logistikkette**
Packaging system and method for transport and handling, which can be automated, and storage of piece-goods in a logistic chain
Système et méthode d'emballage pour le transport automatisable, la manutension automatisable et le stockage de marchandise de détail dans une chaîne logistique

(30) Priorität: 08.01.2004 DE 102004002434
(43) Veröffentlichungstag der Anmeldung: 13.07.2005
(73) Patentinhaber: Universität Stuttgart, 70174 Stuttgart (DE)
(72) Erfinder: Wehking, Karl-Heinz, Prof. Dr. Ing., 70469 Stuttgart (DE)
(74) Vertreter: Bulling, Alexander

(56) Entgegenhaltungen:
- WO-A-99/37411
- DE-A1- 2 646 064
- DE-A1- 4 233 688
- DE-A1- 19 745 228
- US-A- 5 006 996
- US-A1- 2003 065 421

## Beschreibung

Die vorliegende Erfindung betrifft ein System und ein Verfahren zur Verpackung und Handhabung von Stückgut zum automatisierbaren Transport und zur Lagerung über eine Logistikkette gemäß den Merkmalen des Oberbegriffs des Anspruchs 1 sowie des Anspruchs 17.

Für den Transport von Stückgut beispielsweise zwischen einem Unternehmen und einem Endverbraucher ist es erforderlich, die Waren zu verpacken und mit einem Informationsträger für die transportrelevanten Daten über die Logistikkette zu versehen. Die logistische Infrastruktur beispielsweise von Kurier-, Express- und Paketdienstleistern verwendet hierzu unterschiedliche Systeme, wobei aufgrund der Vielzahl möglicher Arten und Formen der Verpackungen für das Stückgut am häufigsten Klebeetiketten mit Strichcodes verwendet werden, die über optische Lesegeräte automatisch eingelesen und für die Steuerung des Transportes verwendet werden können. Ziel ist es dabei, die Ware über die gesamte Logistikkette zu verfolgen und den Materialfluss entsprechend dem Zielort zu steuern, ohne dass eine mehrfache manuelle Eingabe von Daten hierfür erforderlich ist. Es hat sich gezeigt, dass ein Großteil der zu befördernden Waren (Stückgut) im Bereich von Klein- und Kleinstverpackungen liegt, die beispielsweise weit unterhalb von standardisierten Transportpaletten, wie zum Beispiel den Euro-raietten oder dergleichen, liegen. Die große Anzahl unterschiedlicher Verpackungsgrößen und Formen bereitet für die Transportunternehmen Schwierigkeiten dahingehend, dass einerseits das Transportvolumen von Fahrzeugen nicht optimal ausgenutzt werden kann, und dass andererseits immer noch manuelle Zwischenschritte in der Logistikkette erforderlich sind und ein automatisiertes Handhaben von Stückgut über die Logistikkette hinweg verhindern.

Es gibt also heutzutage eine Vielzahl unterschiedlichster Verpackungsgrößen und -formen, die für den Transport von Stückgut eingesetzt werden. Die Steuerung von Paketsendungen erfolgt bisher zum Beispiel über ein außen an der Verpackung angebrachtes Etikett, auf welchem ein Leitcode oder ein Steuerungscode beispielsweise in Form eines Barcodes aufgedruckt ist, der von Sortier- und Erkennungsmaschinen gelesen werden kann. Die Lesegeräte sind optische Erfassungssysteme, wobei hier einerseits ein Problem dahingehend besteht, dass die Erfassung von Informationen bei Verschmutzung oder Beschädigung der äußeren Informationsträger behindert wird. Andererseits ist die Datenmenge dieser Art von Kennzeichnungen begrenzt und beinhaltet in der Regel lediglich die Adressangaben des Empfängers. Weitere Informationen hinsichtlich des Inhalts der zu transportierenden Ware können so nicht aufgenommen werden. Außerdem erfordert ein solches System eine mehrfache Dateneingabe über die gesamte Logistikkette, was relativ zeitaufwendig ist. Die unterschiedliche Platzierung von Etiketten an den unterschiedlich geformten Transportverpackungen für das Stückgut erschwert außerdem ein automatisierbares Erkennen und Behandeln der Transportware. Für viele Zwischenschritte sind weiterhin manuelle Dateneingaben und -erfassungen erforderlich.

Im Bereich der Logistik von Klein-Stückgut ist es außerdem bekannt, standardisierte Transportbehälter mit sogenannten Transpondern (elektronische, radiofrequenzbasierte Informationsträger-Sender/Empfänger) zu verwenden.

Aus der EP 0 619 246 B1 sind wannenförmige Transportbehälter mit RFID-Transpondern (Radio Frequency Identification Transponder) bekannt, bei denen die Transponder an einer Stelle des Behälters befestigt sind, die leicht zugänglich und für die Signalgebung und den Signalempfang optimal ist. Die Transponder sind hier mittig an einem Bodenbereich der wannenartigen Transportbehälter vorgesehen. Das Stückgut oder die zu transportierende Ware wird hierbei jedoch nicht fest mit dem Transportbehälter verbunden. Die Transportbehälter sind auch nicht für eine automatisierte Handhabung über eine Logistikkette geeignet. Dieses System ist daher lediglich für eine Verwendung innerhalb eines Großhandelslagers und nicht für den Transport über eine gesamte Logistikkette geeignet.

Aus dem Dokument DE 26 46 064 A1 ist ein System zur Verpackung von Stückgut bekannt, bei welchem kastenartige Behältnisse mit mechanischen Zielsteuerungsschienen zum Ablesen über optische Einrichtungen versehen sind, die seitlich an den Behältnissen angebracht sind. Die Transport-Kisten sind hier nach oben hin offen und es ist keine sichere Verpackung und Fixierung von unterschiedlichen Stückgut-Formen möglich.

Aus der internationalen Anmeldung WO 01/51369 A1 sind ebenfalls Transportkästen offenbart, die jedoch nur intern (innerhalb eines Herstellungsbetriebes) verwendet werden. Eine Verpackung und Handhabung von Stückgut über mehrere logistische Stationen hinweg ist daraus nicht entnehmbar.

Weiterhin ist aus der DE 37 11 237 C2 ein Steuerverfahren für die Steuerung von Stückgutförderanlagen bekannt, bei welchem mittels Transpondern, die an Transportbehältern für das Stückgut befestigt sind, die logistikrelevanten Daten gespeichert und die Förderung und der Transport überwacht und gesteuert werden können. Das System sieht keine spezifische Ausgestaltung von Transportbehältern vor. Die Schnittstelle zu automatischen Handhabungsmaschinen ist hier nicht gelöst.

Die vorliegende Erfindung hat demgegenüber zur Aufgabe, ein System und ein Verfahren zur Verpackung und zur Handhabung von Stückgut für einen automatisierbaren Transport über eine Logistikkette vorzuschlagen, welche insgesamt eine vollständig automatisierbare Handhabung und Überwachung auch von unterschiedlich geformtem und verpacktem Stückgut sicher über die gesamte Logistikkette und dennoch auch manuelle Zwischenschritte ohne ein Störung des Systems ermöglichen.

Diese Aufgabe wird mit dem System mit den Merkmalen gemäß Anspruch 1 sowie mit dem Verfahren mit den Schritten gemäß Anspruch 17 gelöst. Vorteilhafte Ausgestaltungen und Weiterbildungen der Erfindung sind Gegenstand der jeweils abhängigen Ansprüche.

Unter Tablar wird im Rahmen dieser Erfindung ein im wesentlichen flaches und formstabiles Element zur Aufnahme von verschiedenartig geformtem und unterschiedlich großem Stückgut verstanden. Unter Transponder wird vorliegend ein elektronisches Sende-/ Empfangsgerät verstanden, welches wiederbeschreibbar Informationen hinsichtlich des zu transportierenden Stückguts speichern und bei Bedarf wieder abgeben kann mittels zugehöriger Abfragegeräte. Hinsichtlich der Form und Ausgestaltung derartiger Transponder wird auf den diesbezüglichen Offenbarungsgehalt der DE 37 11 237 C2 Bezug genommen.

Durch das Vorsehen von modular bzw. modulförmig aufgebauten Transportbehältern, die jeweils ein formstabiles, flaches Tablar mit einem Radiofrequenz-Transponder und einen zugehörigen Deckel aufweisen, kann das zu befördernde Stückgut in standardisierten Behältnissen untergebracht und auf einfache Weise mit den für den Transport erforderlichen Daten und zusätzlichen Inhaltsangaben versehen werden. Die modulare Form der Transportbehälter bedeutet, dass verschiedene Größen von Transportbehältern derart vorgesehen sind, dass sie in mehreren Abstufungen, aber immer angepasst auf eine Standardgröße der Transportgestellrahmen vorgesehen sind. Hierdurch wird eine optimale Raumausnutzung auch bei vielfältigen und unterschiedlich großen Abmessungen von Stückgut gewährleistet. Die modulartig standardisierte Transportbehälterfamilie gemäß der Erfindung ist also mit formstabilen Tablaren als Basis für die Verpackung und gleichzeitig als Träger für die Radiofrequenz-Transponder ausgestattet, wobei so sperrige und für einen Rücktransport raumeinnehmende Behältnisse vermieden werden.

Das Vorsehen von einerseits Transportgestellrahmen für die Transportbehälter und von andererseits geeigneten Transpondern hat zudem den Vorteil, dass eine Pulkerkennung sämtlicher im Transportgestellrahmen vorhandener Transportbehälter zeitgleich möglich ist. Alle beladenen Tablare innerhalb eines Transportgestellrahmens können folglich von einem die behälterseitigen Transponder auslesenden Sensor erfasst werden.

Außerdem ist das erfindungsgemäße System durch die Tablare mit Transpondern für eine Automatisierung der Handhabung optimal angepasst, da Halterungen und Greifmittel auf einfache Weise mit den Tablaren zusammenwirken können. Die manuelle Handhabung in Zwischenschritten ist dennoch möglich, da die flachen Tablare auch von Hand aufgenommen und sicher befördert werden können. Die Transportbehälter gemäß der Erfindung sind in ihrer Höhe des Deckels ebenso wie in der Breite und der Länge modulartig aufgebaut, das heißt auf jeweils die größeren Abmessungen bzw. Einheiten baukastenförmig abgestimmt. Die modulare Form von unterschiedlich großen Transportbehältern kann vorzugsweise auf eine standardisierte Fächergröße der Transportgestellrahmen und/oder auf ein Standard-Transportpalettenmaß abgestimmt sein. Die zu befördernde Ware ist über die gesamte Logistikkette mit einem beschreibbaren und eine große Informationsmenge aufnehmbaren Informationsträger in Form von Radiofrequenz-Transpondern versehen, die auf raumsparende Art und weise an den flachen Tablaren selbst befestigt sind. Die Ware (unterschiedlich verpacktes Stückgut) selbst muss daher nicht mit den elektronischen Informationsträgern direkt versehen werden. Eine Wiederverwertbarkeit der Transportbehälter und insbesondere der mit den Transpondern versehenen Tablare ist so gewährleistet. Da die Transportbehälter modulartig und in ihren Abmessungen auf die Transportgestellrahmen angepasst aufgebaut sind, können auch unterschiedlich große Transportbehälter (Tablare mit zugehörigen Deckeln) in dem System verwendet werden, die sich innerhalb eines Transportgestellrahmens dennoch raumsparend einlagern lassen. Die Zugänglichkeit zu jedem Stückgut ist dennoch gewährleistet, da keine willkürlich zusammengewürfelten Stapelungen innerhalb großer Transportkästen oder -behälter vorgenommen werden, sondern jedes Transportbehältnis in dem Transportgestellrahmen einzeln aufnehmbar ist. Auch dies ermöglicht einen einfachen manuellen Eingriff auf die Ware innerhalb einer Logistikkette, so dass sie eine vollständige oder auch nur eine teilweise Automatisierung je nach Bedarf aufweisen kann.

Nach einer vorteilhaften Ausgestaltung der Erfindung ist eine auf die Größe des Tablars abgestimmte Unterlage vorgesehen, an welcher das Stückgut fixiert ist. Auf diese Weise können unterschiedlich geformte und eingepackte Waren auf der Unterlage verrutschfest fixiert werden, ohne dass besondere Befestigungsmittel an dem Tablar des Transportbehälters vorzusehen sind. Die Fixierung und Befestigung des Stückguts an der Unterlage stellt auf schnelle und einfache Art und Weise eine flache Verpackungseinheit bereit, die sicher und durch einfaches Aufsetzen auf ein entsprechend großes Tablar gesetzt und den mit einem zugehörigen Deckel verschlossen werden kann. Die Unterlage erleichtert zudem ein automatisiertes Aufnehmen und Transportieren des Stückguts beispielsweise durch gabelartige und untergreifende Fördermittel.

Nach einer weiteren vorteilhaften Ausgestaltung des erfindungsgemäßen Verpackungssystems sind die modularen Transportbehälter in baukastenförmig abgestimmten Abmessungen derart vorgesehen, dass jeweils mehrere kleine Transportbehälter der Größe eines nächstgrößeren Transportbehälters entsprechen. Einzelne Fächer der Gestellrahmen können so optimal beladen werden, da kleinere Transportbehälter zu Einheiten entsprechend den nächstgrößeren Transportbehältern derart aufgestapelt werden können, dass der vorhandene Raum vollständig ausgenutzt wird. Kleinere und größere Transportbehälter mit ihren jeweiligen, mit Transpondern versehenen Tablaren können so aufeinander und nebeneinander in die Fächer der Transportgestellrahmen eingesetzt werden. Die Abstände der regalartigen Fächer der Gestellrahmen können ihrerseits in unterschiedlichen, auf die Größe der jeweiligen Transportbehälter abgestimmten Abmessungen zueinander montiert sein. Nach einem bevorzugten Aspekt der Erfindung sind drei Modulgrößen von Transportbehältern vorgesehen, die aufeinander abgestimmt sind. Die meisten Größen von Klein-Stückgut können hiermit abgedeckt werden, so dass keine Sonder-Transportbehälter erforderlich sind.

Nach einer weiteren vorteilhaften Ausgestaltung des erfindungsgemäßen Systems sind die Abmessungen der modulartigen Transportbehälter auf eine standardisierte Transport-Palettengröße abgestimmt und dementsprechend größenmäßig abgestuft vorgesehen. Hierdurch sind die Gesamtheiten von mehreren Transportbehältern und/oder Gestellrahmen auf jeweils einer standardisierten Palettengröße vorgesehen, welche über entsprechend standardisierte Transportvorrichtungen und/oder Transportfahrzeuge leicht in bestehenden Systemen transportierbar sind. Die standardisierte Palettengröße kann beispielsweise eine Euro-Palette oder ein ähnliches Standardsystem sein. Eine derartige standardisierte Palette kann vorzugsweise eine rechteckige Grundform aufweisen.

Nach einer weiteren vorteilhaften Ausgestaltung des erfindungsgemäßen Systems ist das Tablar des Transportbehälters mit Handhabungsmitteln für den Transport und die Fixierung versehen. Die einzelnen Transportbehälter, die jeweils mit einem separaten Transponder als Informationsträger versehen sind, können so durch Fördervorrichtungen und Handhabungsgreifer aufgenommen, verstellt und in die Transportgestellrahmen oder in anderweitige Regalsysteme eingesetzt werden. Eine manuelle Handhabung ist somit nicht erforderlich. Die Handhabungsmittel der Tablare können beispielsweise in Form von Aufnahmeschächten, Nuten, Bohrungen zur Zentrierung und Handhabung oder vorstehende Zapfen vorzugsweise an den Seitenbereichen der Tablare ausgebildet sein. Die Vorrichtungen zur Handhabung sind mit entsprechenden komplementären Handhabungsmitteln vorgesehen. Die flache Ausbildung der Tablare hat den Vorteil, dass eine Standardisierung von Transportbehältern und zugehörigen Fördereinrichtungen leicht durchführbar ist, da die Befestigungs- und Handhabungspunkte gleichbleibend an vorbestimmten Stellen vorgesehen sein können.

Nach einer weiteren vorteilhaften Ausgestaltung des erfindungsgemäßen Systems ist das Tablar an der Oberseite mit einem umlaufenden Aufnahmeschlitz für den Deckel versehen. Der Deckel kann so durch einfaches Aufsetzen geschlossen werden und erfordert keine zusätzliche Betätigung von Haltemitteln oder dergleichen. Die Befestigung des Deckels mit einer umlaufenden Nut hat den Vorteil, dass dieser gegen ein Verrutschen gesichert ist und dennoch ein leichtes Aufsetzen wie auch ein leichtes Öffnen gewährleistet sind.

Nach einer weiteren vorteilhaften Ausgestaltung der Erfindung sind der Deckel und die Unterlage des Transportbehälters als Einweg-Teile ausgebildet, und das Tablar ist als Mehrweg-Teil konzipiert. Die Transportbehälter bestehen daher nur aus flachen Mehrweg-Tablaren, die einfach und wenig raumeinnehmend rücktransportiert werden können. Die zusätzlichen Teile, der Deckel und die Unterlage zur Fixierung des Stückguts, sind demgegenüber Einweg-Teile und können zur Entsorgung auch bei dem Endkunden verbleiben. Die Transportbehälter sind außerdem auf diese Art und Weise leicht und dennoch für den standardisierten, modulartigen Transport ausreichend formsteif ausgebildet, unabhängig von der Form und der Konsistenz der zugrunde liegenden Ware.

Nach einer weiteren vorteilhaften Ausgestaltung der Erfindung ist das Stückgut über ein flexibles und durchsichtiges Folien-Material an der Unterlage befestigt. Die Befestigung kann beispielsweise über eine Klarsichtfolie erfolgen, die um das Stückgut und um die Unterlage herum festgewickelt wird. Die Befestigung ist somit durchsichtig und hält das Stückgut dennoch fest in der jeweiligen Lage auf der Unterlage. Die Unterlage ist vorzugsweise auf die Größe der Innenabmessungen des Deckels und des jeweiligen Tablars abgestimmt.

Nach einer weiteren vorteilhaften Ausgestaltung der Erfindung ist das System mit Transportgestellrahmen versehen, die in ihrem Höhenabstand variabel ausgebildete Fächer aufweisen. Die Fächer der Gestellrahmen können so auf kleinere oder größere Module der Transportbehälter eingestellt werden und beispielsweise für den Transport von Kleinststückgut auf eine kleinste Behältergröße eingestellt werden oder einzeln oder insgesamt auf größere Behälter eingestellt sein. Die variable Höheneinstellung der Fächer der Transportgestellrahmen kann über jedes dem Fachmann hierfür bekannte Mittel und insbesondere über eine Rasterung, eine Klemmverbindung oder eine Schraubverbindung realisiert sein.

Nach einer weiteren vorteilhaften Ausgestaltung des erfindungsgemäßen Systems sind die Transportgestellrahmen jeweils mit einem zusätzlichen Radiofrequenz-Transponder versehen. Die Variabilität der Steuerung des Systems wird so erhöht, da nicht nur die einzelnen Behälter mit vielfältigen Informationen über den Inhalt, die Größe und beispielsweise den Bestimmungsort des Stückguts versehen werden können, sondern auch einzelne oder sämtliche Gestellrahmen. Beispielsweise kann für verschiedene Bestimmungsorte jeweils ein Gestellrahmen vorgesehen wurden, der mit unterschiedlich großen Modul-Transportbehältern bestückt ist.

Nach einer weiteren vorteilhaften Ausgestaltung der Erfindung sind die Transportgestellrahmen verschiebbar, bewegbar und/oder rollbar ausgebildet. Die Transportgestellrahmen können schon beim Hersteller oder in einem zentralen Versandlager mit den entsprechenden Waren bestückt und dann auf einfache Art und Weise in Transportfahrzeuge gerollt und über den weiteren Transportablauf in Lagergängen und dergleichen fortbewegt werden. Die verschiebbaren, bewegbaren und/oder rollbaren Gestellrahmen sind vorzugsweise mit Feststellmitteln, wie Bremsen oder dergleichen, ausgestattet.

Nach einer weiteren vorteilhaften Ausgestaltung des erfindungsgemäßen Systems sind die Transportgestellrahmen derart modular aufgebaut, dass sie auf die Größe einer Standard-Palettengröße angepasst sind. Entweder sind mehrere einzelne Gestellrahmen, zum Beispiel zwei, in einer Größe vorgesehen, dass sie gemeinsam eine Palettengröße in der Grundfläche bilden. Oder ein einziger Transportgestellrahmen ist in seinen Außenabmessungen (Breite und Tiefe) auf die Größe einer Standard-Palettengröße abgestimmt. Die Abstimmung auf Standardgrößen von herkömmlichen Transportunterlagen hat den Vorteil, dass das System vollständig in bestehende Logistiksysteme integrierbar ist. Die am weitesten verbreiteten Standardpaletten, welche mit dementsprechend angepassten Gabelstaplern aufgenommen und transportiert werden, sind auch mit dem erfindungsgemäßen, neuartigen System vollständig kompatibel.

Nach einer weiteren vorteilhaften Ausgestaltung des erfindungsgemäßen Systems weisen die Transportgestellrahmen komplementäre Führungen zum Halten und Führen der Tablare auf. Die Tablare können beispielsweise mit seitlichen Führungsnuten an der Unterseite vorgesehen sein, die mit entsprechenden Führungskanten an den Seitenwänden der Gestellrahmen zusammenwirken. Auf diese Welse ist das Einsetzen der modulartigen Transportbehälter nach dem Einpacken und Codieren des Stückguts in die Fächer der Gestellrahmen wesentlich vereinfacht, da diese nur aufgesetzt und eingeschoben werden müssen.

Nach einer weiteren vorteilhaften Ausgestaltung des erfindungsgemäßen Systems sind die Transportgestellrahmen mit Kopplungsmitteln zum lösbaren Fixieren mit anderen Transportgestellrahmen oder innerhalb eines Transport- oder Laderaumes versehen. Die beladenen Transportgestellrahmen können so sicher in den mobilen Laderäumen fixiert werden, und ein Verrutschen oder ein Beschädigen der Ladung wird sicher vermieden.

Das erfindungsgemäße Verfahren zur Verpackung und zur Handhabung von Stückgut über eine Logistikkette mit den Schritten gemäß Anspruch 16 besteht aus dem Verwenden von Transportbehältern mit Radiofrequenz-Transpondern (RFID-Transponder) zur Überwachung und Steuerung, wobei die Transportbehälter in zugehörige Gestellrahmen mit regalartigen Fächern gestellt werden und das Stückgut an einer Unterlage eines modular aufgebauten Transportbehälters fixiert wird. Die mit dem befestigten Stückgut versehene Unterlage wird auf ein Tablar, welches mit dem Transponder versehen ist, aufgesetzt (Schritt b). Nach dem Schließen des Transportbehälters über einen Deckel (Schritt c) wird der modular aufgebaute Transportbehälter in dafür vorgesehene Fächer eines Transportgestellrahmens eingesetzt (Schritt d). Das erfindungsgemäße Verfahren ist durch eine sehr einfache Handhabung mittels Tablaren und zugehörigen Deckelelementen gekennzeichnet, wobei die Tablare über einen leistungsstarken Informationsträger in Form eines Radiofrequenz-Transponders verfügen.

Des Weiteren ist das erfindungsgemäße Verfahren auf einfache Art und Weise automatisierbar, indem die Tablare mit Handhabungs- und/oder Kopplungsmitteln für dafür vorgesehene Beförderungseinrichtungen ausgestattet werden. Das erfindungsgemäße Verfahren ermöglicht eine optimale Raumausnutzung von bestehenden Lager- und Transporträumen, da die einzelnen Tablare und die zugehörigen Deckel für unterschiedlich große Stückgut-Waren (Kleinstteile wie auch Kleinteile und Großteile) jeweils angepasste Formen aufweisen. Die modular aufgebauten Transportbehälter sind dennoch zu großen, kompakten und den vorhandenen Raum vollständig ausfüllenden Einheiten zusammenstellbar. Die einzelnen Verfahrensschritte können sämtliche oder nur einzelne ebenso von Hand wie auch automatisch durchgeführt werden, wodurch die Variabilität innerhalb einer bestehenden Logistikkette erhöht ist.

Gemäß einer vorteilhaften Ausgestaltung des erfindungsgemäßen Verfahrens werden die Stückguteigenschaften des Stückguts vor dem Fixieren auf der Unterlage bestimmt. Die Stückguteigenschaften können insbesondere das Gewicht, die Geometrie (Breite, Höhe, Länge), Inhaltsangaben, Angaben zu einer möglichen Gefahrenklasse, Produktdaten, Kundendaten, Auftraggeberdaten, Bestellerdaten oder dergleichen sein. Hierdurch ist der spezifische Transportbehälter für jedes Stückgut nicht nur mit den für den Transport erforderlichen Informationen (Adressangaben etc.) innerhalb des Transponders versehen. Die Informationen können bei Bedarf auch an Zwischenstationen der Logistikkette abgerufen werden. Die Informationen enthalten nicht nur die Angaben hinsichtlich eines Zielortes, sondern ebenso weitergehende, für den Transport relevante Angaben, wie beispielsweise die Gefahrengutklasse oder dergleichen. Das vorherige Bestimmen der Eigenschaften wie dem Gewicht und der Geometrie dient auch dem automatisierten Ablauf, da hierdurch die entsprechenden modulartigen Transportbehälter für jedes Stückgut ausgewählt werden können. Die Größen sind auf die Innenabmessungen der jeweiligen Transportbehälter-Module abgestimmt, sodass eine optimale Ausnutzung des vorhandenen Lager- und Transportraums gewährleistet ist.

Nach einer vorteilhaften Ausgestaltung des erfindungsgemäßen Verfahrens werden die jeweiligen modulartigen, Standards sierten Transportbehälter über Handhabungsmittel, welche am Tablar jeweils vorgesehen sind, automatisch aufgenommen, transportiert und in die Gestellrahmen eingesetzt. Die Handhabungsmittel können in Form von Nuten, Aufnahmen, Bohrungen, vorstehenden Zapfen, Führungskanten oder dergleichen realisiert sein. Die Handhabung und der Weitertransport der modulartig aufgebauten Transportbehälter sind so erheblich vereinfacht. Die Fördervorrichtungen müssen nur entsprechend den Handhabungsmitteln an den Tablaren ausgebildete, komplementäre Greifmittel aufweisen.

Nach einer weiteren vorteilhaften Ausgestaltung des erfindungsgemäßen Verfahrens wird das Stückgut an den Unterlagen der Transportbehälter mittels eines flexiblen und im Wesentlichen durchsichtigen Folien-Materials befestigt. Das Befestigen ist außerordentlich schnell durchführbar und erlaubt ein sicheres Fixieren auch unterschiedlich und uneben geformter Stückgut-Waren. Die Fixierung ist einfach lösbar und erlaubt auch ein Kontrollieren der Ware und von etwaigen Angaben auf der Innenverpackung eines derartigen Stückguts im Transportzustand.

Nach einer weiteren vorteilhaften Ausgestaltung des erfindungsgemäßen Verfahrens werden modular in Größenabstufungen aufgebaute Transportbehälter verwendet, welche auf die Form und die Abmessungen des Transportgestellrahmens jeweils abgestimmt sind. Die modulare Ausgestaltung der Transportbehälter erlaubt ein Verarbeiten von sehr unterschiedlichen Größenverhältnissen von Stückgut, ohne dass die Handhabbarkeit und der Automatisierungsgrad heruntergefahren werden müssen. Die unterschiedlich, modular in Größenstufen abgestimmten Transportbehälter werden jeweils für entsprechende Waren nach einem Feststellen deren Größen und Gewichtsverhältnissen verwendet. Die zusammengesetzten Transportbehälter bilden dennoch jeweils optimal im räumlichen Sinne ausgenutzte Transporteinheiten, die vorzugsweise auch automatisiert gehandhabt und weitertransportiert werden können.

Weitere Vorteile und Merkmale der Erfindung sind der nachfolgenden detaillierten Beschreibung zu entnehmen, in welcher die Erfindung mehr im Detail in Bezug auf die in den beigefügten Zeichnungen dargestellten Ausführungsbeispiele beschrieben wird.

In der Zeichnung zeigen:
- Fig. 1: eine schematische Perspektivansicht eines Ausführungsbeispiels eines Transportbehälters für Stückgut und seiner Elemente gemäß einem erfindungsgemäßen System sowie den Ablauf des Verfahrens;
- Fig. 2a: eine Draufsicht eines Ausführungsbeispiels für ein Tablar des erfindungsgemäßen Verpackungssystems aus Fig. 1;
- Fig. 2b und 2c: Seitenansichten des Ausführungsbeispiels eines Tablars gemäß der Fig. 2a;
- Fig. 3 und 3a: Perspektivansichten eines Ausführungsbeispiels eines Transportgestellrahmens für ein erfindungsgemäßes Verpackungssystem mit einer Rasterung in unbeladenem und beladenem Zustand;
- Fig. 4: Perspektivansichten einer alternativen Ausführung eines Transportgestellrahmens für ein erfindungsgemäßes System mit Klemmung der Fächer in unbeladenem und in beladenem Zustand; und
- Fig. 5: eine schematische Gesamtansicht der Stationen (A bis F) eines Ausführungsbeispiels einer erfindungsgemäß automatisierten Logistikkette für die Verpackung und den Transport von Stückgutwaren unterschiedlicher Größen.

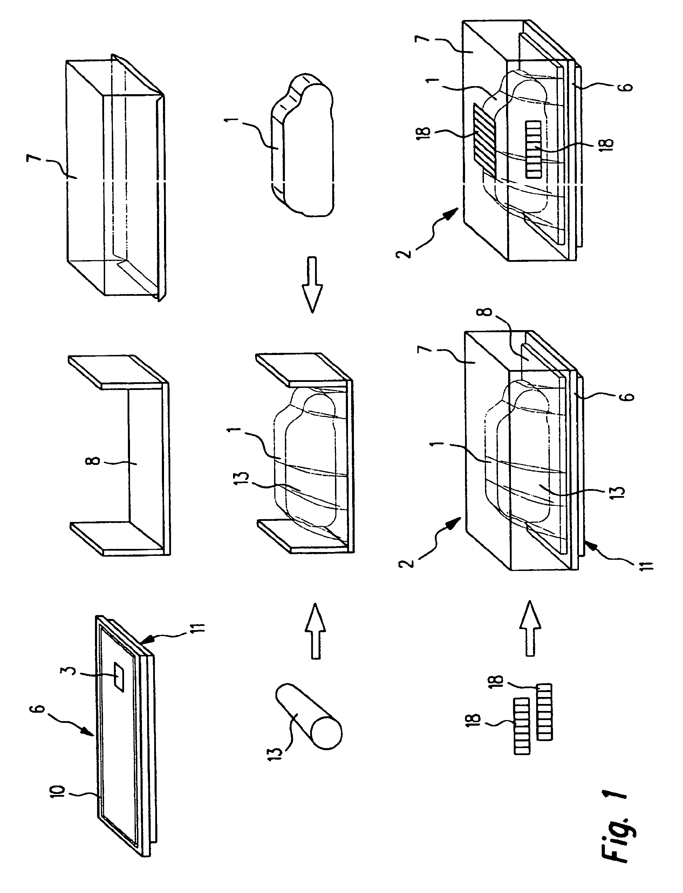

Ein Ausführungsbeispiel eines erfindungsgemäßen Verpackungssystems ist in Fig. 1 anhand der Elemente eines Transportbehälters 2 und dem Verpackungsvorgang von Stückgut 1 beispielhaft dargestellt. Gemäß der Erfindung sind modulare bzw. modulartige Transportbehälter 2 als Basiselemente des erfindungsgemäßen Systems vorgesehen, die in ihrer Größe abgestuft für unterschiedlich großes Stückgut 1 und/oder unterschiedlich verpackte oder beschaffene Waren (Klein- bis Kleinstteile) ausgebildet sind. Das Grundelement der erfindungsgemäßen Transportbehälter 2 ist ein Tablar 6, das mit einem Radiofrequenz-Transponder 3 oder RFID-Transponder versehen ist. Als Tablar 6 wird vorliegend ein steifes, flaches Element verstanden, welches zur Aufnahme von Stückgut für den Transport geeignet ist.

Die Tablare 6 sind ebenso wie die gesamten erfindungsgemäßen Transportbehälter 2 in ihren Abmessungen abgestuft und modulartig vorgesehen, sodass mehrere kleine Einheiten einer nächstgrößeren Einheit in ihren Außenabmessungen im Wesentlichen entsprechen. Vorzugsweise sind drei Größenabstufungen der Transportbehälter 2 vorgesehen, die normierte und/oder standardisierte Abmessungen aufweisen. Hierdurch wird eine automatische Handhabung der Tablare 6 vereinfacht. Das Tablar 6 ist an seiner Oberseite mit einem Aufnahmeschlitz 10 für einen Deckel 7 versehen. Der Deckel 7 kann durch einfaches Aufsetzen ohne weitere Befestigungsmittel eingesetzt werden und ist gegen ein Verrutschen gesichert. Das Tablar 6 ist an den Unterseiten mit nutförmigen Führungen 11 versehen, die einer Handhabung und Führung innerhalb der Transportgestellrahmen und über den gesamten Transportweg dienen. Jedes Tablar ist mit einem Radiofrequenz-Transponder 3 ausgestattet, sodass die Ware nicht selbst mit einem Informationsträger versehen werden muss Der Transponder 3 erlaubt das wiederbeschreibbare Aufnehmen von transportrelevanten Daten, wie zum Beispiel das Gewicht, die Geometrie des Stückguts, die Bruchgefahr, eine Artikelnummer, Absende- und Zielanschrift. Die Radiofrequenz-Transponder 3 sind wiederbeschreibbar, sodass zumindest die Tablare 6 der Transportbehälter 2 des erfindungsgemäßen Systems vorzugsweise als Mehrweg-Teile ausgebildet sind.

Die Radiofrequenz-Transponder 3 an den Tablaren 6 erlauben ein sicheres und kontaktloses Lesen und/oder Schreiben von transportrelevanten Informationen über entsprechende Abfrage-/Schreibeinrichtungen (nicht gezeigt), wobei grundlegende Informationen über die gesamte Transportkette erhalten bleiben und nicht mehrfach eingegeben bzw. eingelesen werden müssen. Dies ermöglicht einen vollständig automatisierten Transportablauf beispielsweise direkt vom Hersteller einer Ware bis hin zum Endkunden über mehrere Zwischenhändler. Die erfindungsgemäßen Transportbehälter 2 weisen ferner bei dem in Fig. 1 dargestellten Ausführungsbeispiel eine Unterlage 8 auf, auf welcher das Stückgut 1 lösbar mittels einer Klarsichtfolie fixiert wird. Die Unterlage 8 kann beispielsweise U-förmig oder als flaches Element ausgebildet sein. Das Fixieren des Stückguts 1 mittels eines flexiblen, folienartigen Materials 13 ist leicht durchzuführen, unabhängig von der Größe und Form des Stückguts 1. Die Ware ist dennoch von außen sichtbar. Ein Verrutschen innerhalb des Behälters 2 wird vermieden. Nach dem Fixieren des Stückguts 1 mittels der Klarsichtfolie 13 an der Unterlage 8 wird der Deckel 7 aufgesetzt. Der Deckel 7 kann ebenfalls durchsichtig ausgebildet sein und ist vorzugsweise als Einweg-Teil ebenso wie die Unterlage 8 gestaltet. Gegebenenfalls, ohne dass dies für die Erfindung erforderlich wäre, können weitere Informationsträger 18 an der Außenseite des Deckels 7 der Transportbehälter 2 aufgebracht werden, beispielsweise Klebeetiketten oder dergleichen.

Die modularen Transportbehälter 2 erlauben ein sicheres und einfaches Verpacken unterschiedlichster Waren/Stückgut und insbesondere von Kleinteilen und Kleinstteilen, wobei dennoch die für den Transport erforderlichen Informationen sicher durch den am Tablar 6 befestigten Transponder 3 gespeichert werden können. Die Tablare 6 weisen sämtliche Informationen und sämtliche tür die Automatisierung erforderlichen Mittel, wie zum Beispiel Führungen, Haltekanten, Fixier- oder Zentrierbohrungen oder dergleichen, auf, sodass die anderen Elemente der erfindungsgemäßen Transportbehälter 2 beliebig ausgebildet sein können. Beispielsweise können die Unterlage 8 und der Deckel 7 auch als einfache Kartonageelemente ausgebildet sein.

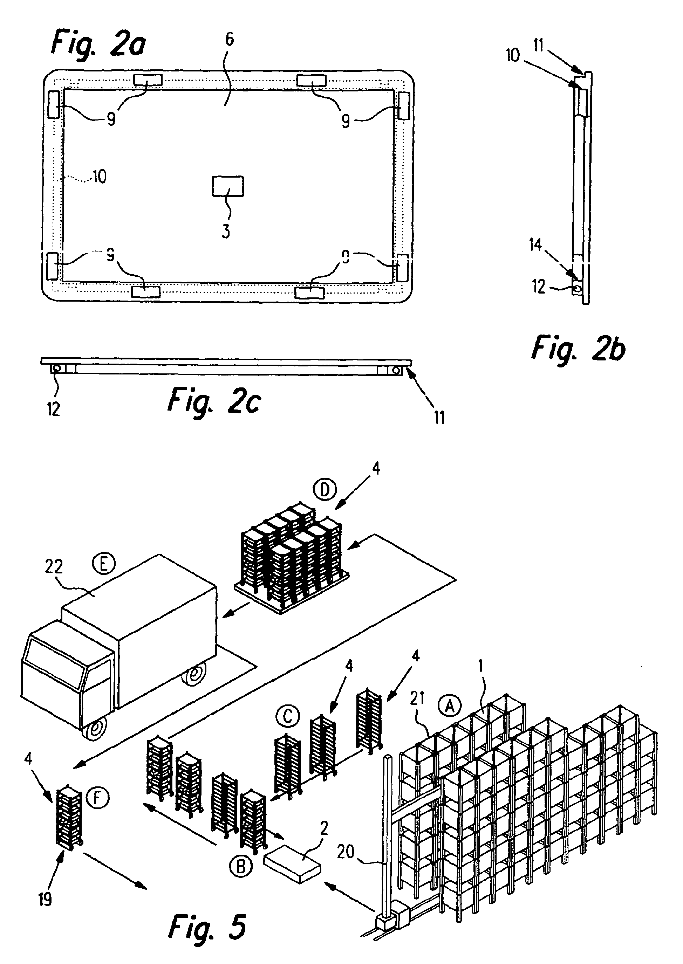

Das Basiselement des erfindungsgemäßen modulförmigen Transportbehälters, welches aus einem standardisierten Tablar 6 mit einem Informationsträger 3 (Transponder) besteht, ist in einem Ausführungsbeispiel in verschiedenen Ansichten der Fig. 2a, 2b und 2c wiedergegeben. Das Tablar 6 weist eine rechteckige Grundform auf, die auf Standardabmessungen von zugehörigen Transportgestellrahmen (nicht gezeigt) abgestimmt ist. Das Tablar 6 ist mittig mit einem RFID-Transponder 3 für ein elektronisches Steuer-, Verfolgungs- und Markierungsverfahren ausgestattet. Der Transponder 3 kann beispielsweise in einer Ausnehmung des Tablars 6 vorgesehen sein. Die Funktionsweise derartiger, an sich bekannter RFID-Transponder ist im Zusammenhang mit anderen Transportsystemen beschrieben worden, und es wird diesbezüglich auf die Offenbarung der DE 37 11 237 C2 Bezug genommen. Die erfindungsgemäßen Tablare 6 sind mit einem Führungsschlitz 10 zur Aufnahme eines zugehörigen Deckelteils versehen. Weiterhin sind Handhabungsmittel 9 zum Aufnehmen und sicheren Transportieren der Transportbehälter 2 an der Unterseite der Tablare 6 vorgesehen. Im vorliegenden Fall sind die Handhabungsmittel 9 als eine Mehrzahl von an den Seitenrändern angeordneten Hubschächten für vertikale Aufnahmen versehen, in welchen beispielsweise Fördervorrichtungen mit entsprechenden Vorsprüngen die Tablare ergreifen und transportieren können. Des Weiteren sind Führungen 11 an den Seitenrändern der Tablare 6 vorgesehen, mittels welchen die Tablare 6 in komplementären Führungsschienen von Regalen oder Transportgestellen (nicht dargestellt) eingeführt und gehalten werden können. Weiterhin weist bei diesem Ausführungsbeispiel das Tablar 6 Löcner 12 für automatische Fördermittel, wie Roboter/Greifer auf, mittels welchen eine Aufnahme über komplementäre Stifte und eine Lagefixierung der modulförmigen Transportbehälter 2 jederzeit ermöglicht wird. Die seitlichen Führungen 11 sind bei diesem Ausführungsbeispiel als U-Gabel-Nut ausgebildet, sie können jedoch auch jede andere, dem Fachmann hierfür bekannte Form aufweisen. Das Material und die Abmessungen der Tablare 6 sind derart, dass sie starr ausgebildet sind und dem gesamten Transportbehälter des erfindungsgemäßen Systems eine starre Basis bieten, die ein sicheres Transportieren und Lagern von unterschiedlichsten Waren und Verpackungen von Kleinst- bis Kleinteilen ermöglichen.

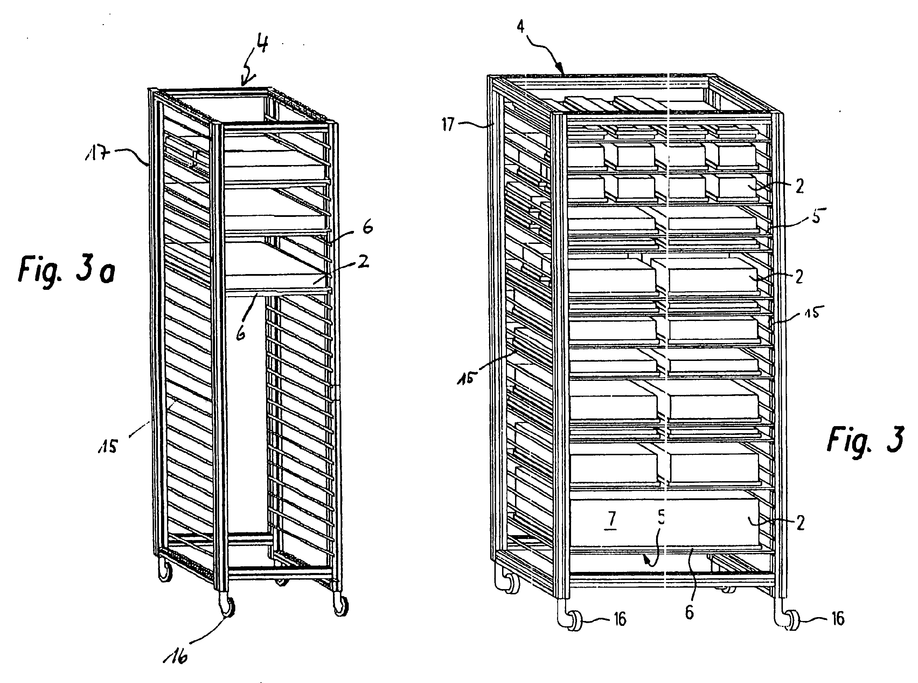

In der Fig. 3 ist ein Ausführungsbeispiel von einem Transportgestellrahmen 4 des erfindungsgemäßen Systems in leerem und in beladenem Zustand jeweils wiedergegeben zur Veranschaulichung der modulförmigen vorteilhaften Ausgestaltung des Systems. Der Transportgestellrahmen 4 dieses Ausführungsbeispiels besteht aus vertikalen und horizontalen Rahmenprofilen 17, sodass ein allseitig offenes Grundgestell bereitgestellt ist. Die Seiten des Transportgestellrahmens 4 sind hier mit gleichmäßig zueinander beabstandeten Rasterschienen 15 versehen, auf welche Fächer 5 variabel aufgelegt bzw. in welche die bodenartigen Fächer 5 eingeschoben werden können. Die Rasterschienen 15 sind beispielsweise in einem gleichmäßigen Abstand von 50 bis 70 mm zueinander fest an den Rahmenprofilen 17 montiert, sodass für unterschiedlich große Modul-Transportbehälter 2 auch unterschiedlich hohe Fächer 5 je nach Bedarf vorgesehen werden können. Auch die Breite und Tiefe der Transportgestellrahmen 4 ist auf die Größe und Form der modulförmigen Transportbehälter 2 erfindungsgemäß abgestimmt: Der Transportgestellrahmen 4 weist beispielsweise eine Tiefe von 600 mm, eine Breite von 800 mm und eine Höhe von 1400 bis 1600 mm auf. Die Grundfläche kann auch auf eine Standard-Palettengröße abgestimmt sein, wie zum Beispiel die sogenannten Euro-Paletten. Bei der Beladung der Transportgestellrahmen können so unterschiedlich größe Kleinteile und Kleinstteile, die in jeweils dafür vorgesehene Transportbehälter 2 gemäß dem zu Fig. 1 Gesagten eingebracht und mit den transportrelevanten Informationen über die Transponder versehen worden sind, in die Fächer 5 eingesetzt und transportiert werden.

Die Raumausnutzung ist daher optimal und die Zugänglichkeit zu den einzelnen Transportbehältern 2 ist jederzeit sicher gewährleistet. Die Transportgestellrahmen 4 können ihrerseits mit einem zusätzlichen Radiofrequenz-Transponder (nicht dargestellt) versehen sein, so dass auch die Gestellrahmen 4 einzeln über entsprechende Abfrageeinrichtungen beim Transport und der Lagerung überwacht und gesteuert werden können. Es wird so ein vollständig automatisierbares System zum Transport von Kleinteilen bereitgestellt, das äußerst variabel und vollständig unabhängig von optischen Lesevorrichtungen ausgebildet ist. Die Beschreibung der Transportgestellrahmen 4 erfolgt hier beispielhaft für jedes Aufnahmeteil innerhalb einer gesamten Logistikkette und lässt sich zum Beispiel auch auf Regalsysteme in Lagern oder in fest eingebaute Aufnahmefächer von Transportfahrzeugen übertragen. Die in Fig. 3 dargestellten Transportgestellrahmen sind mit Rollen 16 versehen, sodass sie zum Beladen von Fahrzeugen verschoben werden können. Im Rahmen der Erfindung ist auch denkbar, dass die Transportgestellrahmen ein Antrieb aufweisen, der ein verfahrne der Transportgestellrahmen ermöglicht. Für die Transportgestellrahmen können nach einem vorteilhaften Aspekt der Erfindung andere separate, angetriebene Fördermittel (nicht dargestellt) vorgesehen sein.

In der Fig. 3a ist eine Variante der Ausführungsform gezeigt, wobei hier keine Zwischenböden 5 der Gestellrahmen vorgesehen sind sondern die Tablare 6 direkt in entsprechende Führungen 15 des Transportgestellrahmens 4 eingeschoben sind.

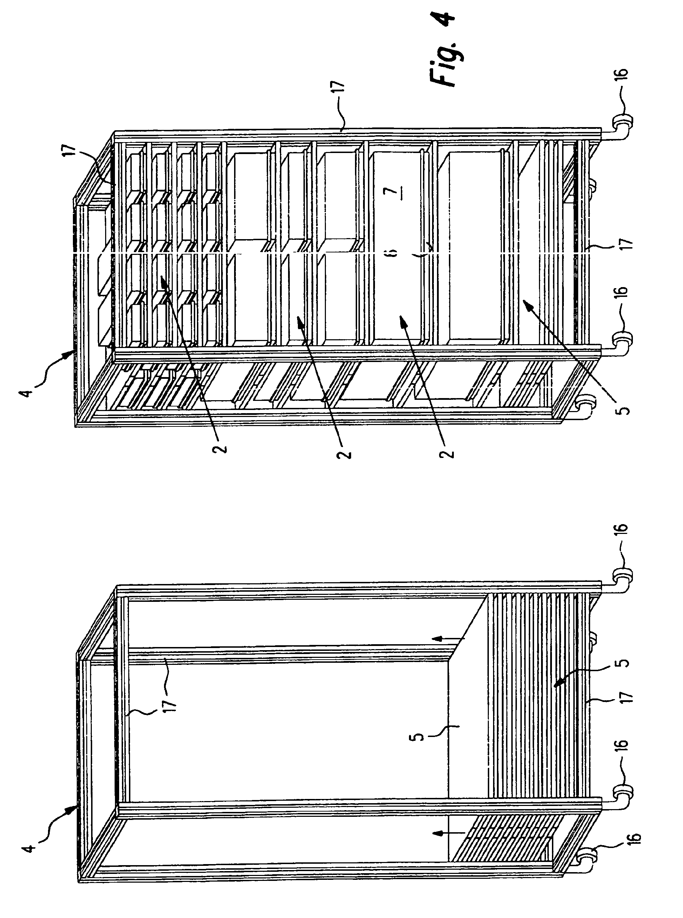

Eine Variante von Transportgestellrahmen 4 ist in analogen Ansichten (beladen/unbeladen) in Fig. 4 wiedergegeben. Gegenüber dem zuvorigen Ausführungsbeispiel sind hier keine Rasterungen 15 vorgesehen, sondern die einzelnen Fächer 5 können variabel in beliebigen Stellungen über Klemmung oder eine andere lösbare Fixierung an den Rahmenprofilen 17 befestigt werden. Die Variabilität des Systems wird hierdurch weiter erhöht. Mit dem erfindungsgemäßen System und Verfahren ist so ein raumsparendes und vollständig automatisierbares Transportieren von Kleinteilen auch unterschiedlichster Größen auf relativ einfache Art und Weise möglich. Der modulartige und jeweils aufeinander abgestimmte Aufbau der Transportbehälter 2 einerseits und der Gestellrahmen 4 andererseits ermöglicht in Zusammenhang mit den Tablaren 6, die mit den Datenträgern in Form von Transpondern 3 ausgestattet sind, eine erstmals vollständig über eine gesamte Logistikkette automatisierte Handhabung und Beförderung von unterschiedlichsten Waren (stückgut), unabhängig von ihrem Gewicht, ihrer spezifischen Verpackungsart, ihren Abmessungen oder dergleichen. Die Tablare 6 mit den zugehörigen Deckeln 7 können auf entsprechend eingestellte Fächer 5 der Gestellrahmen 4 einfach aufgesetzt werden oder auch, wie in der Figur 3a gezeigt, direkt ohne Zwischenböden 5 in den Gestellrahmen eingesetzt werden. Die Raumausnutzung innerhalb von Transportfahrzeugen ist optimal, und eine sichere Nachverfolgung und Steuerung ist über die elektronische, berührungslose Transponder-Technologie jederzeit gewährleistet.

Schließlich zeigt die Fig. 5 eine schematische Gesamtansicht der möglichen Stationen (Bezugszeichen A bis F) eines Beispiels einer erfindungsgemäß automatisierbaren Logistikkette für Stückgutwaren. Das Stückgut 1 befindet sich bei A noch in einem Lagerregal 21 eines Herstellers oder eines Handelsunternehmens, und zwar in unterschiedlichen Arten, Formen und Größen von Verpackungen. Mittels eines mechanisierten Hebekrans 20 wird das Stückgut 1 bedarfsgerecht aus dem Lagerregal 21 entnommen. Anschließend wird es automatisch zu einer Verpackungs- und Beladungsstation (bei Bezugszeichen B) mit dem Kran/Transporter 20 gebracht. Dort wird es auf einem Ladungsträger bzw. Transportbehälter 2 in einer entsprechenden Größe (Modulgröße) verpackte, wie zuvor beschrieben. Dann werden Transportgestellrahmen 4 mit entsprechenden Fächergrößen bereitgestellt, in welche die Behälter 2 mit dem Stückgut 1 automatisch eingeschoben werden. Die beladenen Gestellrahmen 4 werden sodann einzeln oder miteinander gekoppelt (verbunden) zu einer Verladestelle bei D transportiert. Die Gestellrahmen 4 sind dazu insbesondere mittels Rollen verschiebbar und können alle, oder nur einige, einen eigenen Antrieb zum verfahren vereinfachten bzw. auch automatischen Verfahren aufweisen. Von der Verladestelle D werden sie dann bei E in ein Transportfahrzeug, z.B. einen Kleinlaster oder Transporter 22, geladen. Der modulare Aufbau der Behälter 2 und der Gestellrahmen 4 erlaubt eine optimale, automatische Ausnutzung des vorhandenen Laderaumes in dem Transporter 22. Nachdem die Ware dann zu ihrem Bestimmungsort transportiert wurde, können dann bei F die Transportgestellrahmen 4 einzeln oder in Gruppen ausgefahren werden. Hierfür können raupenartige Förderfahrzeuge 19 vorgesehen werde, welche unter die Gestellrahmen 4 greifen oder jedes andere, dem Fachmann hierfür bekannte Fördermittel. Bei dem automatischen transportieren der Gestellrahmen 4 über Förderraupen 19 oder dgl. können auch mehrer Rahmen 4 miteinander über entsprechende Kopplungsmittel fest verbunden werden und ähnlich einem Zug transportiert werden.

## Patentansprüche

1. System zur Verpackung und zur Handhabung von Stückgut (1) zum automatisierbaren Transport und zur Lagerung über eine Logistikkette mit Transportbehältern (2) für das Stückgut (1), welche jeweils mit einem Radiofrequenz-Transponder (3) zur Überwachung und Steuerung versehen sind, und mit zugehörigen Transportgestellrahmen (4) zur Autnanme der Transportbehälter (2), **dadurch gekennzeichnet, dass** die Transportbehälter (2) modular aufgebaut und in ihren Abmessungen auf die Transportgestellrahmen (4) angepasst sind und je ein im wesentlichen flaches und formstabiles Tablar (6) aufweisen, wobei der Transponder (3) an dem Tablar (6) befestigt ist.

2. System gemäß Anspruch 1, **dadurch gekennzeichnet, dass** die Transportbehälter (2) einen das Tablar (6) abdeckenden Deckel (7) aufweisen.

3. System gemäß Anspruch 1 oder 2, **dadurch gekennzeichnet, dass** die Transportbehälter (2) eine auf die Größe des Tablars (6) abgestimmte Unterlage (8) aufweisen, an welcher das Stückgut (1) fixiert ist.

4. System gemäß Anspruch 1, 2 oder 3, **dadurch gekennzeichnet, dass** die modularen Transportbehälter (2) in baukastenförmig abgestimmten Abmessungen derart vorgesehen sind, dass jeweils mehrere kleine Transportbehälter (2) der Größe eines nächstgrößeren Transportbehälters (2) entsprechen.

5. System gemäß einem der vorherigen Ansprüche, **dadurch gekennzeichnet, dass** die Abmessungen der Transportbehälter (2) auf eine standardisierte Palettengröße abgestimmt und dementsprechend größenmäßig abgestuft vorgesehen sind.

6. System gemäß einem der vorherigen Ansprüche, **dadurch gekennzeichnet, dass** das Tablar (6) mit Handhabungsmitteln (9, 12) versehen ist.

7. System gemäß einem der Ansprüche 2 bis 5, **dadurch gekennzeichnet, dass** das Tablar (6) an der Oberseite mit einem umlaufenden Aufnahmeschlitz (10) für den Deckel (7) versehen ist.

8. System gemäß einem der vorherigen Ansprüche, **dadurch gekennzeichnet, dass** das Tablar (6) ein formstabiles Kunststoffteil ist.

9. System gemäß einem der Ansprüche 2 bis 7, **dadurch gekennzeichnet, dass** der Deckel (7) und/oder die Unterlage (8) des Transportbehälters (2) als Einweg-Teile und das Tablar (6) als ein Mehrweg-Teil konzipiert sind.

10. System gemäß einem der Ansprüche 2 bis 8, **dadurch gekennzeichnet, dass** das Stückgut (1) über ein flexibles und durchsichtiges Folien-Material (13) an der Unterlage (8) befestigt ist.

11. System gemäß einem der vorherigen Ansprüche, **dadurch gekennzeichnet, dass** die Transportgestellrahmen (4) in ihrem Höhenabstand variabel ausgebildete Fächer (5) zur Aufnahme der Tablare (6) aufweisen.

12. System gemäß einem der vorherigen Ansprüche, **dadurch gekennzeichnet, dass** die Transportgestellrahmen (4) Führungen (11) zum Halten und Führen der Tablare (6) aufweisen.

13. System gemäß einem der vorherigen Ansprüche, **dadurch gekennzeichnet, dass** die Transportgestellrahmen (4) mit jeweils einem Radiofrequenz-Transponder versehen sind.

14. System gemäß einem der vorherigen Ansprüche, **dadurch gekennzeichnet, dass** die Transportgestellrahmen (4) rollbar ausgebildet sind.

15. System gemäß einem der vorherigen Ansprüche, **dadurch gekennzeichnet, dass** die Transportgestellrahmen (4) modular derart aufgebaut sind, dass sie auf die Grundfläche einer Standard-Palettengröße oder eines Standard-Beförderungsmittels angepasst sind.

16. System gemäß einem der vorherigen Ansprüche, **dadurch gekennzeichnet, dass** die Transportgestellrahmen (4) Kopplungsmittel aufweisen zum lösbaren Verbinden mit anderen Transportgestellrahmen (4) oder innerhalb eines Transport- oder Laderaumes.

17. Verfahren zur Verpackung und zur Handhabung von Stückgut (1) zum automatisierbaren Transport und zur Lagerung über eine Logistikkette, insbesondere für ein System gemäß einem der Ansprüche 1 bis 16, bei welchem Transportbehälter (2) mit Radiofrequenz-Transpondern (3) zur Überwachung und Steuerung versehen werden und die Transportbehälter (2) in zugehörige Transportgestellrahmen (4) gestellt werden, **gekennzeichnet durch** die Schritte:
a. Fixieren des Stückguts (1) an einer Unterlage (8);
b. Setzen der Unterlage (8) auf ein Tablar (6) eines modular aufgebauten Transportbehälters (2), wobei das Tablar mit dem Transponder (3) versehen ist;
c. Schließen des Transportbehälters (2) **durch** setzten eines Deckels (7) auf das Tablar (6) und
d. Setzen des vom Tablar (6) und Deckel (7) gebildeten Transportbehälters (2) in den Transportgestellrahmen (4).

18. Verfahren gemäß Anspruch 17, **gekennzeichnet durch** Bestimmen von Stückguteigenschaften des Stückguts (1), insbesondere dem Gewicht, der Form und einer Gefahrenklasse, vor dem Schritt (a.).

19. Verfahren gemäß Anspruch 17 oder 18, **gekennzeichnet durch** automatisches Aufnehmen, Transportieren und Einsetzen der Transportbehälter (2) über am Tablar (6) vorgesehe Handhabungsmittel (9).

20. Verfahren gemäß einem der Ansprüche 17 bis 19, **gekennzeichnet durch** Fixieren des Stückguts (1) an der Unterlage gemäß Schritt (a.) mittels eines flexiblen und im Wesentlichen durchsichtigen Folien-Materials.

21. Verfahren gemäß einem der Ansprüche 17 bis 20, **gekennzeichnet durch** Verwenden von modular in Größenabstufungen aufgebauten Transportbehältern (2), welche auf die Form und die Abmessungen des Transportgestellrahmens (4) abgestimmt sind.

## Claims

1. A system for packing and handling bulk material for automatable shipping and for storage via a logistic chain with shipping containers (2) for the bulk material (1), each of which containers is provided with a radiofrequency transponder (3) for monitoring and control and with associated shipping racks (4) for receiving the shipping containers (2), **characterized in that** the shipping containers (2) are constructed in modular fashion and are adapted in their dimensions to the shipping racks (4), and each has one substantially flat, dimensionally stable pallet (6), and the transponder (3) is secured to the pallet (6).

2. The system as defined by claim 1, **characterized in** the shipping containers (2) have a lid (7) that covers the pallet (6).

3. The system as defined by claim 1 or 2, **characterized in that** the shipping containers (2) have a base (8) which is adapted to the size of the pallet (6) and to which the bulk material (1) is affixed.

4. The system as defined by claim 1, 2 or 3, **characterized in that** the modular shipping containers (2) are provided in dimensions adapted in modular fashion, in such a way that a plurality of small shipping containers (2) together correspond to the size of a next-larger shipping container (2).

5. The system as defined by one of the foregoing claims, **characterized in that** the dimensions of the shipping containers (2) are adapted to a standard pallet size and are accordingly provided in graduated sizes.

6. The system as defined by one of the foregoing claims, **characterized in that** the pallet (6) is provided with handling means (9, 12).

7. The system as defined by one of claims 2 through 5, **characterized in that** the pallet (6) is provided on the top with an encompassing receiving slot (10) for the lid (7).

8. The system as defined by one of the foregoing claims, **characterized in that** the pallet (6) is a dimensionally stable plastic part.

9. The system as defined by one of claims 2 through 7, **characterized in that** the lid (7) and/or the base (8) of the shipping container (2) is conceived of as disposable parts, and the pallet (6) is conceived as a nondisposable part.

10. The system as defined by one of claims 2 through 8, **characterized in that** the bulk material (1) is secured to the base (8) via a flexible and transparent film material (13).

11. The system as defined by one of the foregoing claims, **characterized in that** the shipping racks (4) have compartments (5), embodied variably at the heightwise spacing of the racks, for receiving the pallets (6).

12. The system as defined by one of the foregoing claims, **characterized in that** the shipping racks (4) have guides (11) for holding and guiding the pallets (6).

13. The system as defined by one of the foregoing claims, **characterized in that** the shipping racks (4) are each provided with a radiofrequency transponder.

14. The system as defined by one of the foregoing claims, **characterized in that** the shipping racks (4) are embodied as rollable.

15. The system as defined by one of the foregoing claims, **characterized in that** the shipping racks (4) are constructed in modular fashion, such that they are adapted to the outline of a standard pallet size or of a standard conveyor means.

16. The system as defined by one of the foregoing claims, **characterized in that** the shipping racks (4) have coupling means for releasable connection to other shipping racks (4) or inside a shipping or loading room.

17. A method for packing and for handling bulk material (1) for automatable shipping and for storage via a logistic chain, in particular for a system as defined by one of claims 1 through 16, in which shipping containers (2) are provided with radiofrequency transponders (3) for monitoring and control, and the shipping containers (2) are placed in associated shipping racks (4), **characterized by** the following steps:
a. fixation of the bulk material (1) to a base (8);
b. placing the base (8) on a pallet (6) of a shipping container (2) of modular construction, the pallet being provided with the transponder (3);
c. closing the shipping container (2) by placing a lid (7) on the pallet (6); and
d. placing the shipping container (2), formed by the pallet (6) and lid (7), in the shipping rack (4).

18. The method as defined by claim 17, **characterized by** determining properties of the bulk material (1), in particular its weight, shape, and hazardous-materials classification, before step (a.) is performed.

19. The method as defined by claim 17 or 18, **characterized by** automatic receiving, transporting and inserting of the shipping containers 2 via handling means (9) provided on the pallet (6).

20. The method as defined by one of claims 17 through 19, **characterized by** fixation of the bulk material (1) to the base in step (a.) by means of a flexible and essentially transparent film material.

21. The method as defined by one of claims 17 through 20, **characterized by** the use of shipping containers (2) of modular construction in graduated sizes, the shipping containers being adapted to the shape and dimensions of the shipping rack (4).

## Revendications

1. Système d'emballage et de manutention de marchandises (1) pour le transport et le stockage automatisables dans une chaîne logistique, comportant des conteneurs de transport (2) pour les marchandises (1), lesquels sont chacun munis d'un transpondeur (3) à fréquence radio pour la surveillance et la gestion, et comportant des racks de transport (4) associés pour la réception des conteneurs de transport (2), **caractérisé en ce que** les conteneurs de transport (2) sont construits sous forme modulaire et sont adaptés aux racks de transport (4) quant à leur dimensions, et présentent chacun une tablette (6) sensiblement plate et géométriquement stable, le transpondeur (3) étant fixé sur la tablette (6).

2. Système selon la revendication 1, **caractérisé en ce que** les conteneurs de transport (2) présentent un couvercle (7) recouvrant la tablette (6).

3. Système selon la revendication 1 ou 2, **caractérisé en ce que** les conteneurs de transport (2) présentent un support (8) adapté à la dimension de la tablette (6) et sur lequel les marchandises (1) sont fixées.

4. Système selon la revendication 1, 2 ou 3, **caractérisé en ce que** les conteneurs de transport modulaires (2) sont prévus en forme de caisse de dimensions adaptées pour que plusieurs petits conteneurs de transport (2) équivalent chacun à la taille d'un conteneur de transport (2) de taille immédiatement supérieure.

5. Système selon une des revendications précédentes, **caractérisé en ce que** les dimensions des conteneurs de transport (2) sont adaptées à la taille d'une palette normalisée, et sont échelonnées en conséquence en termes de taille.

6. Système selon une des revendications précédentes, **caractérisé en ce que** la tablette (6) est munie de moyens de manutention (9, 12).

7. Système selon une des revendications 2 à 5, **caractérisé en ce que** la tablette (6) est munie tout autour de sa face supérieure d'une fente de logement périphérique (10) destinée au couvercle (7).

8. Système selon une des revendications précédentes, **caractérisé en ce que** la tablette (6) est un élément en matière plastique géométriquement stable.

9. Système selon une des revendications 2 à 7, **caractérisé en ce que** le couvercle (7) et/ou ou le support (8) du conteneur de transport (2) est conçu pour être un élément de type perdu et la tablette (6) pour être un élément de type réutilisable.

10. Système selon une des revendications 2 à 8, **caractérisé en ce que** les marchandises sont fixées au support (8) par l'intermédiaire d'un matériau de type film flexible et transparent (13).

11. Système selon une des revendications précédentes, **caractérisé en ce que** les racks de transport (4) présentent des cases (5) réalisées pour être variables quant à leur espacement en hauteur, pour le logement des tablettes (6).

12. Système selon une des revendications précédentes, **caractérisé en ce que** les racks de transport (4) présentent des guides (11) pour le maintien et le guidage des tablettes (6).

13. Système selon une des revendications précédentes, **caractérisé en ce que** les racks de transport (4) sont chacun munis d'un transpondeur à fréquence radio.

14. Système selon une des revendications précédentes, **caractérisé en ce que** les racks de transport (4) sont réalisés pour pouvoir rouler.

15. Système selon une des revendications précédentes, **caractérisé en ce que** les racks de transport (4) sont construits sous forme modulaire de telle manière qu'ils sont adaptés à la surface de fond d'une palette de taille standard ou d'un moyen de transport standard.

16. Système selon une des revendications précédentes, **caractérisé en ce que** les racks de transport (4) présentent des moyens d'assemblage pour leur fixation amovible avec d'autres racks de transport (4) ou à l'intérieur d'un compartiment de transport ou de chargement.

17. Procédé d'emballage et de manutention de marchandises (1) pour le transport et le stockage automatisables dans une chaîne logistique, en particulier pour un système selon une des revendications 1 à 16, dans lequel des conteneurs de transport (2) sont munis de transpondeurs à fréquence radio (3) pour la surveillance et la gestion, et les conteneurs de transport (2) sont installés dans des racks de transport (4) associés, **caractérisé par** les étapes qui consistent à :
a. fixer les marchandises (1) sur un support (8) ;
b. placer le support (8) sur une tablette (6) d'un conteneur de transport (2) construit sous forme modulaire, la tablette étant munie du transpondeur (3) ;
c. fermer le conteneur de transport (2) en plaçant un couvercle (7) sur la tablette (6), et
d. placer le conteneur de transport (2) constitué de la tablette (6) et du couvercle (7) dans le rack de transport (4).

18. Procédé selon la revendication 17, **caractérisé par** la détermination avant l'étape (a.) des caractéristiques de marchandise des marchandises (1), en particulier le poids, la forme, et une classe de risque.

19. Procédé selon la revendication 17 ou 18, **caractérisé par** la réception, le transport et l'installation automatique des conteneurs de transport (2) en utilisant des moyens de manutention (9) prévus sur la tablette (6).

20. Procédé selon une des revendications 17 à 19, **caractérisé par** la fixation des marchandises (1) sur le support selon l'étape (a.) au moyen d'un matériau de type film flexible et sensiblement transparent.

21. Procédé selon une des revendications 17 à 20, **caractérisé par** l'utilisation de conteneurs de transport (2) construits sous forme modulaire et échelonnés quant à leur taille, qui sont adaptés à la forme et aux dimensions du rack de transport (4).
